Europäisches Patentamt

European Patent Office

Office européen des brevets

(19)

(11) Veröffentlichungsnummer: **0 260 482 B1**

## (12) EUROPÄISCHE PATENTSCHRIFT

(45) Veröffentlichungstag der Patentschrift: 02.10.91

(51) Int. Cl.⁵: **F16K 5/02, F16K 5/04**

(21) Anmeldenummer: 87112266.9

(22) Anmeldetag: 25.08.87

(54) **Absperrhahn mit zylindrischem oder konischem Küken.**

(30) Priorität: 29.08.86 DE 3629452
13.07.87 DE 3723102

(43) Veröffentlichungstag der Anmeldung:
23.03.88 Patentblatt 88/12

(45) Bekanntmachung des Hinweises auf die
Patenterteilung:
02.10.91 Patentblatt 91/40

(84) Benannte Vertragsstaaten:
AT CH DE FR GB IT LI NL

(56) Entgegenhaltungen:
EP-A- 199 360
DE-A- 1 425 687
US-A- 3 334 650

DESIGN ENGINEERING, April 1985, Seite 21,
London, GB; "Compressed silicone rubber
keeps down valve maintenance"

(73) Patentinhaber: Nemetz, Josef
Hegelstrasse 4c
W-6200 Wiesbaden(DE)

(72) Erfinder: Nemetz, Josef
Hegelstrasse 4c
W-6200 Wiesbaden(DE)

(74) Vertreter: Quermann, Helmut, Dipl.-Ing.
Postfach 6145 Gustav-Freytag-Strasse 25
W-6200 Wiesbaden(DE)

## Beschreibung

Die Erfindung betrifft einen Absperrhahn mit zylindrischem oder konischem Küken in einem metallischen oder einem sonstigen geeigneten Werkstoff bestehenden Gehäuse, das zum Teil oder ganz mit Kunststoff ausgekleidet ist, der keine oder kaum eine genügend eigene Rückstellkraft aufweist, wobei die Kunststoffauskleidung an der zum Küken gelegenen Seite einen über eine Rücksteilkraft aufweisende Einlage gebildeten, jeweils in die Zu- und/oder Ausgangsöffnung am Küken unter Vorspannung anliegenden elastischen Dichtbereich, sowie einen nicht oder kaum elastischer Lagerbereich aufweist.

Absperrhähne mit zylindrischem oder konischem Küken in einem Gehäuse, das zum Teil oder ganz mit Kunststoff ausgekleidet ist, der keine oder kaum eine genügend eigene Rückstellkraft aufweist, gestalten sich günstig bei einteiliger Gehäuseausführung, da das Küken von oben oder unten in das Gehäuse nach der vorgenommenen Auskleidung eingesetzt werden kann, ohne zusätzlich Zwischenräume zur Erzielung einer totraumfreien Ausführung ausfüllen zu müssen. Hinsichtlich der Abdichtung des Kükens bzw. in Verbindung mit der Abdichtung des Kükens ergeben sich jedoch Nachteile. Es ist bekannt, daß bei solchen Absperrhähnen mit zylindrischem Küken die Abdichtung über eine zwischen Gehäuse und Küken eingesetzte Dichtungsbüchse vorgenommen wird, die in ihrer Axialrichtung zum Beispiel über eine Schraube oder ähnlich eine derart starke Verpressung erfährt, bis eine Abdichtung zwischen Küken und Gehäuse herbeigeführt ist. Hierbei ergibt sich um die gesamte Mantelfläche des Kükens und nicht nur um die Öffnung in einem für die Abdichtung erforderlichen Bereich des Durchganges ein gleichmäßig oder fast gleichmäßig hoher Druck, so daß die Abdichtung nur in Verbindung mit einem relativ hohen Öffnungs- und Schließmoment resultierend aus der hierbei auftretenden hohen Reibung zu erreichen ist. Hohe Stellkräfte bzw. starke Reibung führen aber einerseits zu entsprechend hohem Verschleiß und somit auch zur Undichtigkeit und andererseits ergeben sich für die Armatur entsprechend große Antriebe, die zu einer Verteuerung der Armatur führen. Bei da bekannten Absperrhähnen mit konischem Küken wird die Abdichtung zwischen Küken und Gehäuse über eine zum konischen Küken korrespondierende konische Dichtungsbüchse bzw. im Kükenbereich konisch gehaltene Gehäuseauskleidung herbeigeführt, indem das Küken entsprechend stark in den Konus gedrückt wird. Auch hierbei ergibt sich um die gesamte Mantelfläche des Kükens ein gleichmäßig oder fast gleichmäßig hoher Druck, so daß die Abdichtung wiederum nur in Verbindung mit einem relativ hohen Öffnungs- und Schließmoment zu erreichen ist, was zu den bereits erwähnten Nachteilen führt. Auch sind Ausführungen mit konischem oder auch zylindrischem Küken bekannt, bei denen eine höhere Materialverdichtung im Dichtzonenbereich der Dichtungsbüchse die Abdichtung verbessern soll. Doch auch dies beseitigt nicht die erwähnten Nachteile, da zwar mit unterschiedlicher Anpreßkraft, doch letztlich wieder die gesamte Mantelfläche des Kükens zum Tragen kommt. Weiterhin ergibt sich bei einer derartigen Ausführung im Bereich der höheren Materialverdichtung durch die höhere Anpreßkraft an das Küken ein höherer Verschleiß, der eine Undichtheit begünstigt. Bei Verwendung von Fluorkunststoffen kann hierdurch einsetzender Kaltfluß zu einem zusätzlichen Nachteil führen.

Aus Design Engineering, April 1985, Seite 21, London, GB: "Compressed silicone rubber keeps down valve maintenance" ist ein Absperrhahn der eingangs genannten Art mit zylindrischem Küken bekannt. Dieser weist ein in der Durchflußachse geteiltes Gehäuse auf, in das eine Auskleidung eingelegt ist, ferner ist in je eine koaxial zur Zu- und Abgangsöffnung im Gehäuse angeordnete Nut ein Elastomerring eingelegt. Die Auskleidung wird außerhalb des Gehäuses als Kunststoffspritzteil hergestellt und mit den beiden Elastomerringen in das geteilte Gehäuse eingesetzt. Die Innenwand der Auskleidung ist im Bereich des Kükens glatt ausgebildet Die Auskleidung weist im Kükenbereich des Gehäuses keine Verankerung auf.

Aus der USA- 3 334 650 ist ein Kugelhahn mit einem senkrecht zur Durchflußachse 3 geteilten Gehäuse bekannt. Die beiden äußeren Gehäuseteile weisen im Bereich der Kugel axiale und radiale Ringnuten zum Verankern einer Kunststoffauskleidung in den Gehäuseteilen auf. In eine Hinterschneidung der jeweiligen Auskleidung ist lose ein kreisförmiges Ventilsitzteil eingesetzt, das somit zwischen der Kugel und der Auskleidung positioniert ist.

Es ist Aufgabe der vorliegenden Erfindung, ein Absperrhahn der eingangs genannten Art so weiter zu bilden, daß bei diesem auch im Kükenbereich eine optimale Fixierung der Auskleidung sichergestellt ist. Abgesehen hiervon soll der Absperrhahn baulich einfach gestaltet sein.

Die Aufgabe wird bei einem Absperrhahn mit zylindrischem oder konischem Küken der eingangs genannten Art dadurch gelöst, daß die Auskleidung im Kükenbereich des einteilig ausgebildeten Gehäuses verankert ist, wobei das Gehäuse im Kükenbereich Nuten aufweist und die Einlage im Bereich der Nuten mit Bohrungen oder Ausnehmungen zum Verankern der Auskleidung in den Nuten versehen ist. Die Erfindung geht damit von einem einteiligen Gehäuse aus, bei dem die Auskleidung im Kükenbereich die elastische Einlage mit einschließt und eine Bohrung bzw. Ausnehmung oder mehrere davon in dieser durchdringt.

Gemäß einer besonderen Ausführungsform der Erfindung ist vorgesehen, daß der elastische Dichtbereich gegenüber dem Lagerbereich erhaben ausgebildet ist. Der Absperrhahn weist damit ein sehr geringes Öffnungs- und Schließmoment bei einem hohen Dichtigkeitsgrad auf, er ist darüber hinaus sehr verschleißfest und es wird ein Festsetzen des Kükens im Gehäuse verhindert. Der elastische Dichtbereich weist an der Rückseite, das heißt zwischen Auskleidung und Gehäuse die elastische, möglichst komprimierbare Einlage auf, die insbesondere aus Reingraphit, besteht, um den für die Erfordernisse entsprechend geeigneten Dichtwerkstoff, der für die Auskleidung verwendet wird und nur eine mangelhafte oder kaum eine Rückstellkraft besitzt, eine dauerhafte Anpreßkraft gegenüber dem Küken zu verleihen. Diese Einlage wird zweckmäßig bei einem ausgekleideten Gehäuse gleich beim Spritz- oder Preßvorgang mit zwischen Gehäuse und Auskleidung eingebettet. Hierbei kann es sinnvoll sein, daß für den Einspritz- oder Einpreßvorgang die Einlage über zum Beispiel ein Schutzblech gegen den Einspritz- oder Einpreßdruck abgeschirmt wird. Für den Einspritz- oder Einpreßvorgang kann die elastische Einlage zum Beispiel über eine Federspange, Winkelring oder ähnlich in der entsprechenden Position gehalten werden. Beim Einsetzen des Kükens wird der erhabene elastische Bereich, der durchmessermäßig kleiner als der Durchmesser des Kükens ist, durch das Küken der - gestalt verdrängt, daß eine entsprechende Anpreßkraft oder Vorspannung und somit Dichkraft von der Auskleidung gegenüber dem Küken ausgeübt wird ohne, daß eine oder kaum eine höhere Verdichtung oder gar Verquetschung der Auskleidung eintritt. Es wird somit erreicht, daß im Dichtbereich keine zu hohe Flächenpressung entsteht sondern nur eine oder fast nur eine über die elastische Einlage wirkende Belastung. Darüber hinausgehende Belastungen werden von dem nicht oder kaum elastischen Lagerbereich aufgenommen. Der nicht oder kaum elastische Lagerbereich von der Auskleidung ist im Innendurchmesser für ein entsprechendes Lagerspiel etwas größer als der Durchmesser des Kükens ausgebildet, so daß in diesem Bereich keine Vorspannung auf dem Küken lastet. Bei der Betätigung des Kükens tritt bei dieser Ausbildung im Lagerbereich nur noch die aus der jeweiligen Belastung sich ergebende Lagerreibung auf und nicht noch zusätzlich die aus einer Vorspannung resultierende Haftreibung die für die Dichtheit erforderlich ist. Der elastische Bereich der die Dichtfunktion übernimmt gewährleistet über die Elastizität gleichzeitig eine hohe Verschleißfestigkeit, da eine Überbelastung oder gar Quetschung dieses Bereiches durch die Elastizität vermieden wird. Weiterhin ergibt sich somit bei dieser Ausbildung ein geringes Öffnungs- und Schließmoment bei einem hohen Dichtheitsgrad. Da im montierten Zustand des Kükens durchmessermäßig zwischen dem elastischen Dichtbereich und dem nicht oder kaum elastischen Lagerbereich nur eine sehr geringe Differenz, nämlich die des Lagerspiels, besteht, ist auch gleichzeitig eine totraumfreie Ausführung der Armatur gegeben. Sofern das Küken am Antriebsschaft und an der dem Antriebsschaft entgegengesezten Seite gelagert ist, könnte das Spiel zwischen Küken und dem nicht elastischen oder kaum elastischen Lagerbereich je nach Erfordernis auch größer vorgesehen werden.

In einer weiteren Ausgestaltung der erfindung könnte auch der elastische Dichtbereich oder nur ein Teilbereich davon in das Küken gelegt werden. Gleichfalls wäre es möglich, das Küken in der gesamten Mantelfläche elastisch zu gestalten und das Gehäuse oder die Auskleidung im Gehäuse im Bereich das Durchganges leicht erhaben vorzusehen. Auch könnte anstatt eines zylindrischen oder konischen Kükens in etwa der von der Mittellinie des Durchgangs oder in etwa ab der unteren Kante des Durchgangs nach unten liegende Teil des Kükens z.B. kugelig ausgebildet und die obere Hälfte bzw. der verbleibende Bereich zylindrisch oder konisch vorgesehen werden bzw. umgekehrt, so daß ein Einsetzen in das Gehäuse von oben oder unten in üblicher Bauweise möglich ist.

Der Durchgang des Kükens ist an keine bestimmte Form gebunden. Er kann z.B. rund, oval, rechteckförmig, dreieckförmig oder auch seitlich offen vorgesehen werden, so daß das Küken im geschlossenen Zustand nur jeweils an einer Seite dichtend anliegt. Das Küken selbst kann z.B. aus Metall, Keramik, Kohlefaserwerkstoff, aus Metall mit Kunststoff, insbesondere mit einem Fluorkunststoff ummantelt oder auch ganz aus Kunststoff sein.

Die Erfindung ist auch an keine bestimmte Anschlußart beim Gehäuse gebunden. Das Gehäuse des Absperrhahns kann z.B. anschlußseitig in Flansch-, Schweißstutzen- oder Gewinde-ausführung ausgeführt sein.

Die elastische Einlage sollte aus einem Material sein, das einerseits höher temperaturbeständig als die Auskleidung ist und andererseits soll die elastische Einlage gleichzeitig die Abdichtung zwischen Gehäuse und der Rückseite der Auskleidung übernehmen. Sie kann aber auch ringsum oder weitgehend ringsum von der Auskleidung umgeben sein. Hierbei kann z.B. die Einlage vorteilhaft in einer entsprechenden Nut am Boden des Gehäuses positioniert sein. Ebenso sollte eine dünne Stärke des elastischen Materials bereits eine relativ hohe Rückstellkraft erbringen. Für die elastische Einlage ist daher Reingraphit wegen der hohen Temperaturbeständigkeit, chemischen Beständigkeit, Komprimierbarkeit und der Dauerelastizität besonders geeignet. Aber auch ein Elastomer, wenn es den Anforderungen entspricht, oder andere Materialien sind denkbar. Sofern eine Einlage zwar elastisch aber nicht komprimierbar ist, wie es z.T. bei Elastomeren der Fall sein kann ist es zweckmäßig, auf der zur Gehäuseinnenseite der Aussparung gerichteten Seite die Einlage mit einer oder mehreren koaxial zum Durchgang angeordneten Rillen zu versehen. Diese Rillen sind für die auftretende Pressung entsprechend stark vorzusehen und bleiben als Hohlräume zwischen Einlage und der Gehäuseinnenseite der Aussparung bestehen. Hierdurch bleibt die Elastizität der in komprimierbaren Einlage wirksam, die gleichzeitig einen entsprechenden Anpreßdruck über die Auskleidung auf das Küken ausübt.

Für die Auskleidung ist insbesondere ein Fluorkunststoff wegen der hohen chemischen beständigkeit, der guten Gleiteigenschaft und der relativ hohen Temperaturbeständigkeit geeignet. Es kann aber auch ein anderer für die Betriebsverhältnisse geeigneter Kunststoff vorgesehen werden. Die Auskleidung kann im Dichtbereich auch so gestaltet sein, daß im Dichtbereich noch eine Dichtschale als Wechseleinsatz aus einem hochfesten für die Beständigkeit gegen das Medium geeigneten Verschleißwerkstoff angeordnet werden kann, um die Lebensdauer der Armatur noch weiter zu erhöhen. Ein solcher Wechseleinsatz kann auch entsprechend abgedichtet am Küken im erforderlichen Dichtbereich angeordnet werden. Der Wechseleinsatz kann z.B. aus einem verschleißfesten Kunststoff, Keramik oder aus einem anderen geeigneten Material bestehen. Auch kann der Wechseleinsatz selbst einen elastischen Kern bzw. eine elastische Einlage beinhalten.

In einer weiteren Ausgestaltung der Erfindung ist es auch möglich, im Gehäuse über dem Durchgang einen elastischen Bereich der Auskleidung gegenüber dem Küken, ähnlich wie im Dichtbereich, vorzusehen, um die nachfolgende Abdichtung bzw. Stopfbuchse am Antriebsschaft zu entlasten.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen weitere Verbesserungen der aufgezeigten Lösung sind.

In den Figuren I bis 4 ist die Erfindung an zwei Ausführungsformen beispielsweise dargestellt, ohne auf diese Ausführungsformen beschränkt zu sein.

Figur I zeigt einen Teilschnitt eines ausgekleideten Absperrhahnes mit einem elastischen Dichtbereich und zylindrischem Küken,

Figur 2 zeigt einen Teilbereich im Schnitt A-A in der Durchflußachse des Absperrhahns von Figur I ohne Küken,

Figur 3 zeigt einen Absperrhahn wie Figur I, jedoch mit konischem Küken,

Figur 4 zeigt eine elastische Einlage in Sicht der Durchflußachse.

Die Figur I zeigt einen Absperrhahn in einem einteiligen Gehäuse I welches mit einer Kuntstoffauskleidung 2, insbesondere einer Auskleidung aus Fluorkunststoff versehen ist. Die Auskleidung 2 ist zweckmäßig im Küken bereich des einteilig ausgebildeten Gehäuses I über Nuten Ic, Ie verankert wobei Nuten Ie im Küken bereich des Gehäuses vorgesehen sind. Die Auskleidung 2 kann bis zu den Anschlußflanschen Id des Gehäuses I reichen und die Anschlußdichtflächen mit erfassen. Die Auskleidung 2 kann aber auch als Teilauskleidung im zentralen Bereich vorgenommen werden. Dies ist z.B. bei Absperrhähnen mit Gewindeanschluß zweckmäßig. Im zentralen Bereich des Gehäuses I bzw. der Auskleidung 2 ist ein zylindrisches Küken 3 drehbar in einer Aussparung 6 angeordnet. Das Küken 3 weist einen Durchgang 4 auf, der in der gezeigten Offenstellung der Armatur, in der das Medium fließen kann die Zugangsöffnung Ia des Gehäuses I mit der Abgangssöffnung Ib des Gehäuses I verbindet. In der geschlossenen Stellung der Armatur steht die Achse des Durchgangs 4 senkrecht zur Achse der Zugangsöffnung Ia bzw. Abgangsöffnung Ib. Soll die Durchflußmenge des Mediums geregelt werden, nimmt der Durchgang 4 des Küken 3 eine Zwischenstellung zwischen "auf" und "zu" ein. An der jeweils zum Küken 3 gelegenen Seite der Zu- und Abgangsöffnung Ia, ab des Gehäuses I ist zwischen der Auskleidung 2 und dem Gehäuse I je eine elastische Einlage 5 angeordnet. Diese elastische Einlage 5 umgibt jeweils die Zu- und Abgangsöffnung Ia, Ib. Die elastische Einlage 5 kann in einer Ausnehmung im Gehäuse I oder auch entsprechend in der Auskleidung 2 angeordnet sein. Die Einlage 5 ist im Bereich der Nuten Ic des Gehäuses mit Bohrungen oder Ausnehmungen zum verankern der Auskleidung 2 in die Nuten Ic versehen.

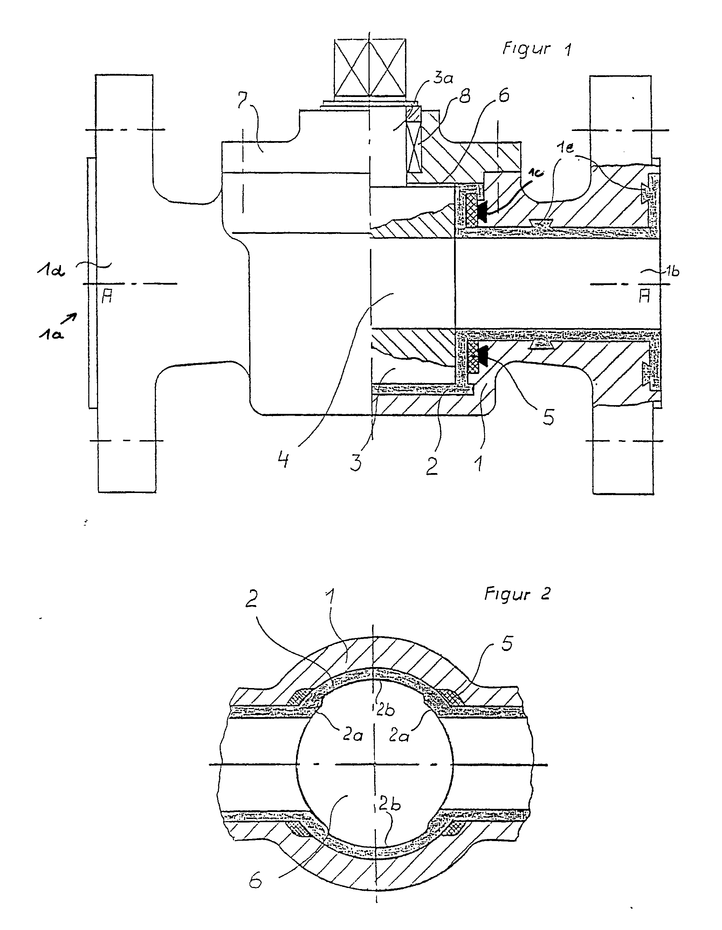

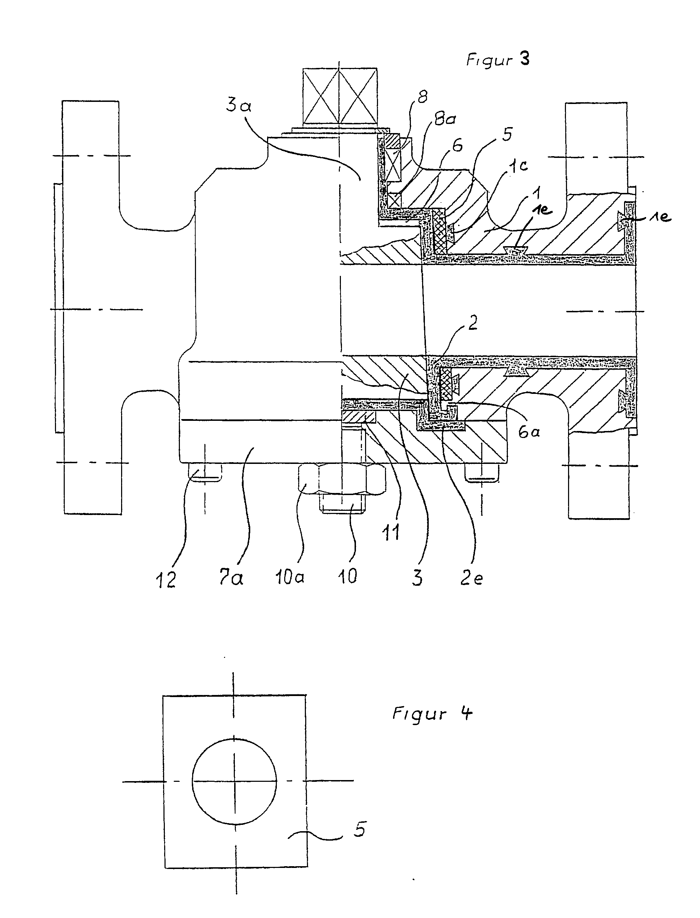

Wie aus Figur 2, die einen Teilbereich eines Schnittes in der Durchflußachse des Absperrhahns nach Figur I, jedoch ohne eingesetztem Küken 3 zeigt, zu ersehen ist, weist die zum Küken 3 gerichtete Innenseite der Auskleidung 2 im Bereich der Einlage 5 einen erhabenen Bereich, nämlich den elastischen Dichtbereich 2a und einen gegenüber dem Dichtbereich 2a zurückgesetzten Bereich, nämlich den Lagerbereich 2b auf. Durchmessermäßig ist der Dichtbereich 2a kleiner und der Lagerbereich 2b größer als der Durchmesser des Küken 3 ausgeführt. Beim einsetzen des Küken 3 in die Aussparung 6 wird der elastische Dichtbereich 2a der Auskleidung 2 verdrängt. Durch diese Verdrängung übt der elastische Dichtbereich 2a gleichzeitig eine entsprechende Vorspannkraft und somit Dichtkraft gegenüber dem Küken 3 aus. Vom Lagerbereich 2b lastet keine vorspannkraft auf dem Küken. Bei der Betätigung des Kükens 3 tritt im Lagerbereich 2b nur noch die aus der jeweiligen Belastung sich ergebende Lagerreibung auf. Es ist sinnvoll, den elastischen Bereich 2a und den Lagerbereich 2b hierbei so zu dimensionieren, daß, wenn das unter Last bzw. unter Druckbeaufschlagung stehende Küken 3 an der Niederdruckseite durch Verdrängen des elastischen Bereichs 2a an dem Lagerbereich 2b zur Anlage kommt, auf der Hochdruckseite der elastische Bereich 2a immer noch am Küken 3 anliegt. Die Abdichtung kann somit je nach Druckzustand auf der Hochdruck- und/oder Niederdruckseite erfolgen. Daneben ist es denkbar daß bei der Auskleidung 2 die Abstufung vom Dichtbereich 2a zum Lagerbereich 2b in zwei Stufen erfolgt. Hierbei ist es sinnvoll, wenn die erste Stufe, nämlich der Lagerbereich z.T. im elastischen Dichtbereich 2a und z.T. im Lagerbereich 2b liegt. Die zweite Abstufung liegt dann voll im Lagerbereich 2b. Hierdurch wird bewirkt, daß im ersten Abstufungsbereich die Lagerung des Kükens 3 nach entsprechender Anpressung des Kükens 3 durch den Betriebsdruck an der der Zugangsöffnung 1a entgegengesetzten Dichtbereich 2a erfolgt, wobei im übrigen Lagerbereich 2b bzw. im Lagerberreich der zweiten Abstufung das Küken 3 freiliegt. Das Drehmoment kann dadurch noch günstiger gestaltet werden. Auch wenn nur eine Abstufung vorgenommen wird ist es sinnvoll aber nicht Bedingung, wenn die Abstufung noch im Dichtbereich 2a bzw. an der Grenze des Dichtbereiches 2a zum Lagerbereich 2b erfolgt, da hierdurch die elastische Einlage 5 besser zur Wirkung kommen kann. Um den Absperrhahn besonders verschleißfest zu machen, kann man, im Dichtbereich 2a der Auskleidung 2 eine Dichtschale als Wechseleinsatz aus einem verschleißfesten Werkstoff einsetzen. Die Dichtschale kann auch aus Werkstoffen bestehen, die höher temperaturbeständig sind als Fluorkunststoffe. Hierfür können z.B Kautschuk/Asbest oder asbestfreie Materialien oder auch Kohleverbundwerkstoffe, Kohlefaserwerkstoffe, keramische Werkstoffe oder ähnliche Werkstoffe geeignet sein. Auch metallische Werkstoffe sind denkbar.

Das Küken 3 kann mit dem Antriebsschaft 3a einteilig oder auch zweiteilig z.B. über eine Nut und Mitnehmerzapfen gekuppelt ausgeführt sein. Das Küken 3 kann auch an der dem Antriebsschaft 3a entgegengesetzten Seite mit einem unteren Lagerzapfen oder einer Lagerbohrung versehen sein der/die korrespondierend in die Lagerbohrung oder den Lagerzapfen von Gehäuse 1 eingreift. Der Antriebsschaft 3a ist z.B. in einer Deckplatte 7 gelagert und mittels z.B. Stopfbuchsdichtung 8 abgedichtet. Die Deckplatte 7 ist mit Gehäuse 1 verschraubt und begrenzt das Küken 3 mit entsprechendem Spiel in axialer Richtung. Sofern das Küken 3 am Antriebsschaft 3a und an der dem Antriebsschaft 3a entgegengesetzten Seite gelagert ist, kann zwischen der Mantelfläche des Kükens 3 und dem Lagerbereich 2b auch ein etwas größerer Spalt vorgesehen werden als ein solcher für ein Lagerspiel, denn die Lagerung des Küken 3 wird in diesem Fall von den beiden Lagerzapfen bzw. Antriebsschaft 3a und dem entgegengesetzt liegenden Lagerzapfen übernommen. Dies kann z.B. zweckmäßig sein, wenn bei der Auskleidung 2 durch das Medium eine Quellung eintritt.

Die Figur 3 zeigt einen Absperrhahn mit einem konischen Küken 3, welches von unten in das Gehäuse 1 eingesetzt ist, wobei die Abdichtung und Lagerung des Antriebsschaftes 3a innerhalb des Gehäusekörpers erfolgt. Die Auskleidung 2, die zweckmäßig wie bei den anderen Ausführungen aus Fluorkunststoff, wie z.B. Polytetrafluorethylen oder einem thermoplastisch verarbeitbaren Fluorkunststoff besteht, reicht bis oder nahezu bis zum Austritt des Antriebsschaftes 3a aus dem Gehäuse 1. Der Antriebsschaft 3a des Kükens 3 ist unterhalb der Stopfbuchsbdichtung 8, die über die Auskleidung 2 gegen den Antriebsschaft 3a dichtend wirkt, mit einer weiteren Abdichtung versehen, die über die Dichteinlage 8a in Zusammenwirken mit der Auskleidung 2 gebildet wird. Die Dichtungseinlage 8a wird zweckmäßig bei einer Auskleidung 2 gleich mit eingespritzt oder eingesintert. Im Bereich der Dichtungseinlage 8a, die zweckmäßig auch aus Reingraphit besteht, wird die Auskleidung 2 etwas erhaben vorgesehen, so daß beim Einsetzen des Kükens 3 eine Vorspannung und somit Abdichtung gegenüber dem Antriebsschaft 3a besteht. Die Vorspannung der Auskleidung 2 und somit Abdichtung im Bereich der Stopfbuchsdichtung 8 gegenüber dem Antriebsschaft 3a erfolgt durch Zusammendrücken der Stopfbuchsdichtung 8. An der Unterseite ist das Gehäuse 1 mit einer Deckplatte 7a z.B. mittels Schrauben 12 verschlossen. Zum Ein- und Nachstellen des Küken 3 bzw. um eine entsprechende Abdichtung zwischen Küken 3 und der Auskleidung 2 zu erreichen ist zweckmäßig in der Mitte der Deckplatte 7a eine Stellschraube 10 mit Mutter 10a angeordnet, die über ein Druckstück 11 entweder direkt auf das Küken 3 wirkt oder über z.B. eine Teilauskleidung 2e die an der Deckplatte 7a angeordnet ist. Durch die Teilauskleidung 2e erübrigt sich ein zusätzliches Abdichten der Stellschraube 10. Diese Ein-und Nachstelleinrichtung kann auch sinnvoll am Antriebsschaft 3a vorgesehen werden, in dem z.B. in einem Teilbereich der Antriebsschaft 3a mit einem Gewinde versehen wird auf dem ein Gewindering angeordnet ist, welcher gegen die Stirnseite des Gehäuses I am Austritt des Antriebsschaftes 3a aus dem Gehäuse I wirkt.

Die Einlage 5 reicht stirnseitig an der zur Deckplatte 7a gelegenen Seite nicht bis zur Deckplatte 7a bzw. bis zur Auskleidung 2. Sie ist in etwa um den Betrag ihrer Stärke in einem Rücksprung 6a der Aussparung 6 des Gehäuses I angeordnet. Sofern ein Wechseleinsatz 2d vorgesehen ist, kann der Rücksprung 6a auch noch zweckmäßig in etwa um die Stärke der Auskleidung 2 gestaltet werden. Dieser Rücksprung 6a kann als Tasche für die Einlage 5 gefräst oder rundherum gedreht werden. Ist der Rücksprung 6a rundherum gegeben, kann die Einlage 5 rundherum bzw. fast rundherum oder auch nur im erforderlichen Dichtbereich vorgesehen werden. Ist die Einlage 5 rundherum oder fast runderum vorgesehen, kann das Küken 3 über Antriebsschaft 3a und an der dem Antriebsschaft 3a entgegengesetzten Seite an der Auskleidung 2 am den Rücksprung 6a bildenden Teil an der Aussparung 6 von Gehäuse I gelagert werden. Ebenso ist es aber auch möglich, wenn z.B. der Antriebsschaft 3a an der Seite der Aussparung 6 angeordnet ist, daß die zweite Lagerung an der dem Antriebsschaft 3a entgegengesetzten Seite vorgesehen wird. Verankerungsnuten Ic für die Auskleidung 2 können an der Aussparung 6 an geordnet werden. Die Auskleidung 2 steht über den einlagenfreien Bereich oder über Freisparungen mit den Verankerungsnuten Ic in direkter Verbindung. Durch die Anordnung der Einlage 5 in einem Rücksprung 6a kann der Durchmesser des zur Deckplatte 7, 7a gelegenen Gehäuserandes entsprechend klein gehalten werden, wobei die aus der Verschraubung der Deckplatte sich ergebende Vorspannkraft nicht auf die Einlage 5 wirkt. Die gleiche Anordnung ist selbsverständlich auch bei einem zylindrischen Küken 3 möglich, einerlei ob dieses von oben wie z.B. in Figur I oder wie in Figur 3 von unten eingesetzt wird.

Bei einer Aussparung 6 ohne Rücksprung 6a ist es sinnvoll, die Einlage 5 ebenfalls von der Vorspannung der Deckplatte 7, 7a zu entlasten und die Auskleidung 2 an der für das Küken 3 einzusetzenden Seite mit einem entsprechend breiten Dichtrand, der sich am Gehäuse I abstützt, vorzusehen.

Die Figur 4 zeigt die Seitenansicht einer elastischen Einlage 5. Die äußere rechteckige Form kann selbstverständlich auch rund oder zumindest and der unteren oder oberen Seite abgerundet gestaltet sein. Die elastische Einlage 6 kann auch mit Rillen, die z.B. zentrisch um die Durchgangsbohrung angeordnet sind, versehen werden, worin die Auskleidung 2 eine Verankerung findet, um einen möglichen Kaltfluß der Auskleidung 2 einzuschränken.

Aus fertigungstechnischen Gründen kann es sinnvoll sein, wenn sich die Einlage 5 über den gesamten Umfang erstreckt, wobei aber eine Abstufung von Dichtbereich 2a in Lagerbereich 2b vorhanden ist. Die Abdichtung zwischen Gehäuse I und Auskleidung 2 erfolgt dann durch die Auskleidung 2. Ist die Einlage 5 über den gesamten Umfang bzw. ringsum angeordnet, ist es zweckmäßig, das Küken 3 am Antriebsschaft 3a und an der dem Antriebsschaft 3a entgegengesetzten Seite an einem Lagerzapfen oder ähnlich zu lagern.

Im Falle, wenn das Küken 3 zweiteilig ausgeführt ist, d.h. wenn der Antriebsschaft 3a z.B. über einen mit Flächen versehenen Mitnehmerzapfen in eine Nut am Küken 3 eingreift und so gekuppelt das Küken 3 bei Drehung mitnimmt, ist auch die Anordnung eines schwimmenden Kükens 3 in der Auskleidung 2 möglich.

Bei allen Ausführungen kann durch die vorgesehene Unterteilung von Dichtbereich 2a und Lagerbereich 2b ein Spalt zwischen Küken 3 und, Auskleidung 2, die zweckmäßig auch in der Aussparung 6 über Nuten Ic, Ie im Gehäuse I verankert sein kann, vorgesehen werden, dessen Stärke von praktisch null aufwärts, so daß so viel wie noch keine Pressung von dem Lagerbereich 2a auf das Küken 3 ausgeht, je nach Erfordernis gewählt werden.

Selbst wenn die Auskleidung 2 in dem das Küken 3 umgebenden Bereich nicht in Dichtbereich 2a und Lagerbereich 2b unterteilt, jedoch die Einlage 5 über den gesamten Umfang bzw. ringsum für den Dichtbereich angeordnet ist und der Lagerbereich außerhalb des Bereiches der Einlage 5 z.B. am Antriebsschaft 3a und an einem dem Antriebsschaft 3a entgegengesetzten gelegenen Lagerzapfen oder direkt am Umfang des Kükens 3 unterhalb oder oberhalb der Einlage 5 und an der entgegengesetzten Seite unterhalb oder oberhalb der Einlage 5 an einem etwas abgesetzten Umfang bzw. Durchmesser des Kükens 3 vorgesehen ist, ist bereits über die Elastizität der Einlage 5 ein günstiges Öffnungs- und Schließmoment gegeben, da hierdurch eine Quetschung oder Überbeanspruchung der Auskleidung 2 beim Einsetzen des durchmessermäßig gegenüber der Auskleidung 2 größeren Kükens 3 vermieden wird. Auch bei eventuell eintretender Quellung der Auskleidung 2 kann ein Ausgleich über die elastische Einlage 5 erfolgen, so daß eine Überbeanspruchung oder Quetschung der Auskleidung 2 auch hierbei weitgehendst unterbunden wird. Wenn der Lagerbereich oberhalb und unterhalb der einlage 5 an der Auskleidung 2 angeordnet ist, ist es Zweckmäßig, an der für die Einlage 5 einzusetzenden Seite den Rücksprung 6a bzw. eine entsprechende Schulter für die Lagerung durch einen Einlegering an der Aussparung 6 des Gehäuses I zu bilden. Gleiches ist auch sinnvoll, wenn eine Lagerung am Antriebsschaft 3a erfolgt. Die Verankerung der Auskleidung 2 wird in Nuten lc der Aussparung 6 vorgesehen, wobei die einlage 5 im Bereich der Nuten lc mit entsprechenden Bohrungen oder entsprechenden Ausnehmungen versehen ist.

**Patentansprüche**

1. Absperrhahn mit zylindrischem oder konischem Küken (3) in einem metallischen oder aus einem sonstigen geeigneten Werkstoff bestehenden Gehäuse (1), das zum Teil oder ganz mit Kunststoff ausgekleidet ist, der keine oder kaum eine genügende eigene Rückstellkraft aufweist, wobei die Kunststoffauskleidung (2) an der zum Küken (3) gelegenen Seite einen über eine Rückstellkraft aufweisende Einlage (5) gebildeten, jeweils in die Zu- und/oder Ausgangsöffnung am Küken (3) unter Vorspannung anliegenden elastischen Dichtbereich (2a), sowie einen nicht oder kaum elastischer Lagerbereich (2b) aufweist, **dadurch gekennzeichnet,** daß die Auskleidung (2) im Kükenbereich des einteilig ausgebildeten Gehäuses (1) verankert ist, wobei das Gehäuse (1) im Kükenbereich Nuten (1c) aufweist und die Einlage (5) im Bereich der Nuten (1c) mit Bohrungen oder Ausnehmungen zum Verankern der Auskleidung (2) in den Nuten (1c) versehen ist.

2. Absperrhahn nach Anspruch 1, **dadurch gekennzeichnet,** daß der elastische Dichtbereich (2a) gegenüber dem Lagerbereich (2b) erhaben ausgebildet ist.

3. Absperrhahn nach Anspruch 2, **dadurch gekennzeichnet,** daß die Abstufung von Dichtbereich (2a) in Lagerbereich (2b) in zwei Stufen erfolgt.

4. Absperrhahn nach einem der Ansprüche 1 bis 3, **dadurch gekennzeichnet,** daß die Auskleidung (2) vor dem Einsetzen des Kükens (3) einen Dichtbereich (2a) aufweist, der durchmessermäßig kleiner als der Durchmesser des Kükens (3) ist.

5. Absperrhahn nach einem der Ansprüche 1 bis 4, **dadurch gekennzeichnet,** daß die elastische Einlage (5) an der Rückseite des Dichtbereiches (2a) zwischen der Kunststoffauskleidung (2) und dem Gehäuse (1) angeordnet ist.

6. Absperrhahn nach einem der Ansprüche 1 bis 5, **dadurch gekennzeichnet,** daß die Einlage (5) über den gesamten Umfang bzw. ringsum zwischen Auskleidung (2) und Gehäuse (1) des Kükens (3) angeordnet ist.

7. Absperrhahn nach einem der Ansprüche 1 bis 6, **dadurch gekennzeichnet,** daß die elastische Einlage (5) aus Reingraphit besteht.

8. Absperrhahn nach einem der Ansprüche 1 bis 7, **dadurch gekennzeichnet,** daß die Auskleidung (2) aus einem Fluorkunststoff, zum Beispiel Polytetrafluorethylen oder einem thermoplastisch verarbeitbaren Fluorkunststoff besteht.

9. Absperrhahn nach einem der Ansprüche 1 bis 8, **dadurch gekennzeichnet,** daß im Dichtbereich (2a) an der zum Küken (3) gerichteten Seite eine Dichtschale als Wechseleinsatz angeordnet ist.

10. Absperrhahn nach einem der Ansprüche 1 bis 9, **dadurch gekennzeichnet,** daß das Küken (3) zylindrisch oder konisch korrespondierend zur Auskleidung (2) ausgeführt ist.

11. Absperrhahn nach einem der Ansprüche 1 bis 10, **dadurch gekennzeichnet,** daß das zylindrische oder konische Küken (3) in etwa ab der Mittellinie des Durchgangs (4) oder in etwa ab der unteren bzw. oberen Kante des Durchgangs (4) an dem nach unten bzw. oben liegenden Teil des Kükens (3) kugelig korrespondierend zur Auskleidung (2) ausgebildet und der verbleibende Bereich des Kükens (3) zylindrisch oder konisch ausgeführt ist.

12. Absperrhahn nach einem der Ansprüche 1 bis 11, **dadurch gekennzeichnet,** daß das Küken (3) aus Metall besteht oder aus Metall mit Kunststoff, insbesondere einem Fluorkunststoff ummantelt ausgeführt ist, bzw. das Küken (3) aus Kunststoff besteht und einen metallischen Kern aufweist oder ganz aus Kunststoff besteht.

13. Absperrhahn nach einem der Ansprüche 1 bis 11, **dadurch gekennzeichnet,** daß das Küken (3) aus Keramik besteht.

14. Absperrhahn nach einem der Ansprüche 1 bis 13, **dadurch gekennzeichnet,** daß die Einlage (5) in einem Rücksprung (6a) der Aussparung (6) des Gehäuses (1) angeordnet ist.

15. Absperrhahn nach einem der Ansprüche 1 bis 14, **dadurch gekennzeichnet,** daß in der Auskleidung (2) im Bereich des Antriebsschaftes (3a) an der zum Küken (3) gelegenen Seite eine elastische Dichteinlage (8a) angeordnet ist.

16. Absperrhahn nach Anspruch 15, **dadurch gekennzeichnet,** daß oberhalb der Dichtungseinlage (8a) eine Stopfbuchsdichtung (8) angeordnet ist, die über die Auskleidung (2) gegen den Antriebsschaft (3a) dichtend wirkt.

17. Absperrhahn nach einem der Ansprüche 1 bis 16, **dadurch gekennzeichnet,** daß das Küken (3) am Antriebsschaft (3a) und an der dem Antriebsschaft (3a) entgegengesetzten Seite an einem Lagerzapfen oder ähnlich oder am oberen und unteren Kükenrand gelagert ist.

**Claims**

1. Isolating valve with a cylindrical or conical plug (3) in a housing (1) which is composed of metal or of an otherwise suitable material and is partially or completely lined with plastics material, which isolating valve has no restoring force of its own or the restoring force of which is hardly adequate, the plastics lining (2) on the side facing the plug (3) having an elastic sealing region (2a), which is formed via an insert (5) having a restoring force and rests on the plug (3) under prestress in each case into the entry and/or exit orifice, and having a bearing region (2b), which is non-elastic or hardly elastic, characterised in that the lining (2) is anchored in the plug region of the housing (1) of integral construction, the housing (1) having grooves (1c) in the plug region and the insert (5) being provided in the region of the grooves (1c) with boreholes or recesses for anchoring the lining (2) in the grooves (1c).

2. Isolating valve according to Claim 1, characterised in that the elastic sealing region (2a) is of elevated construction in relation to the bearing region (2b).

3. Isolating valve according to Claim 2, characterised in that the gradation of the sealing region (2a) into the bearing region (2b) takes place in two stages.

4. Isolating valve according to one of Claims 1 to 3, characterised in that, prior to the insertion of the plug (3), the lining (2) has a sealing region (2a) which is smaller in terms of diameter than the diameter of the plug (3).

5. Isolating valve according to one of Claims 1 to 4, characterised in that the elastic insert (5) is arranged on the rear side of the sealing region (2a) between the plastics lining (2) and the housing (1).

6. Isolating valve according to one of Claims 1 to 5, characterised in that the insert (5) is arranged over the entire circumference or all-around between the lining (2) and the housing (1) of the plug (3).

7. Isolating valve according to one of Claims 1 to 6, characterised in that the elastic insert (5) is composed of pure graphite.

8. Isolating valve according to one of Claims 1 to 7, characterised in that the lining (2) is made of a fluoroplastic, for example polytetrafluoroethylene or a thermoplastically processable fluoroplastic.

9. Isolating valve according to one of Claims 1 to 8, characterised in that a sealing dish is arranged as exchangeable insert in the sealing region (2a) on the side directed towards the plug (3).

10. Isolating valve according to one of Claims 1 to 9, characterised in that the plug (3) is of cylindrical or conical design corresponding to the lining (2).

11. Isolating valve according to one of Claims 1 to 10, characterized in that the cylindrical or conical plug (3) is of spherical construction approximately from the centre-line of the passage (4) or approximately from the lower or upper edge of the passage (4) on the part of the plug (3) lying towards the bottom or the top, corresponding to the lining (2), and the remaining region of the plug (3) is of cylindrical or conical design.

12. Isolating valve according to one of Claims 1 to 11, characterized in that the plug (3) is composed of metal or of metal sheathed with plastic, in particular a fluoroplastic, or the plug (3) is composed of plastic and has a metal core or is composed completely of plastic.

13. Isolating valve according to one of Claims 1 to 11, characterized in that the plug (3) is composed of ceramic material.

14. Isolating valve according to one of Claims 1 to 13, characterised in that the insert (5) is arranged in a set-back portion (6a) of the recess (6) of the housing (1).

15. Isolating valve according to one of Claims 1 to 14, characterised in that an elastic sealing insert (8a) is arranged in the lining (2) in the region of the driveshaft (3a) on the side facing the plug (3).

16. Isolating valve according to Claim 15, characterised in that there is arranged above the sealing insert (8a) a packing gland seal (8) which as a sealing effect against the driveshaft (3a) via the lining (2).

17. Isolating valve according to one of Claims 1 to 16, characterized in that the plug (3) is mounted on the driveshaft (3a) and on the side opposite the driveshaft (3a) on a bearing pin or similar or on the upper and lower plug edges.

**Revendications**

1. Robinet à boisseau (3) cylindrique ou conique logé dans un corps (1) en métal ou autre matériau approprié revêtu partiellement ou totalement de matière synthétique, et ne présentant pas de force de rappel ou une force de rappel à peine significative, le revêtement en matière synthétique (2) présentant du côté situé du boisseau (3), une zone d'étanchéité élastique (2a) appliquée avec précontrainte contre le boisseau (3) au niveau de l'orifice d'entrée et/ou de l'orifice de sortie ainsi qu'une zone de palier (2b) non élastique ou pratiquement pas élastique, robinet caractérisé en ce que le revêtement (2) est accroché au niveau du boisseau du corps (1) en une seule pièce et au niveau du boisseau, le corps (1) comporte des rainures (1c) et l'insert (5) comporte au niveau des rainures (1c) des perçages ou des cavités pour l'accrochage du revêtement (2) dans les rainures (1c).

2. Robinet selon la revendication 1, caractérisé en ce que la zone d'étanchéité (1a), élastique est en saillie par rapport à la zone de palier (2b).

3. Robinet selon la revendication 2, caractérisé en ce que le décrochement entre la zone d'étanchéité (2a) et la zone de palier (2b) se fait suivant deux gradins.

4. Robinet selon l'une des revendications 1 à 3, caractérisé en ce que le revêtement (2) présente avant la mise en place du boisseau (3), une zone d'étanchéité (2a) dont le diamètre est inférieur au diamètre du boisseau (3).

5. Robinet d'arrêt selon l'une des revendications 1 à 4, caractérisé en ce que l'insert élastique (5) est prévu sur le côté arrière de la zone d'étanchéité (2a) entre le revêtement en matière synthétique (2) et le corps (1).

6. Robinet selon l'une des revendications 1 à 5, caractérisé en ce que l'insert (5) est prévu sur toute la périphérie ou tout autour du boisseau (3) entre le revêtement (2) et le corps (1).

7. Robinet selon l'une des revendications 1 à 6, caractérisé en ce que l'insert élastique (5) est du graphite pur.

8. Robinet selon l'une des revendications 1 à 7, caractérisé en ce que le revêtement (2) est en une matière synthétique fluorée par exemple du polytétrafluoréthylène ou une matière synthétique fluorée thermoplastique.

9. Robinet selon l'une des revendications 1 à 8, caractérisé par une coupelle d'étanchéité constituant un insert remplaçable prévu dans la zone d'étanchéité (2a) du côté tourné vers le boisseau (3).

10. Robinet selon l'une des revendications 1 à 9, caractérisé en ce que le boisseau (3) a une forme cylindrique ou conique correspondant au revêtement (2).

11. Robinet selon l'une des revendications 1 à 10, caractérisé en ce que le boisseau cylindrique ou conique (3) a une forme sphérique correspondant au revêtement (2) à partir sensiblement de la ligne médiane du passage (4) ou sensiblement à partir du bord inférieur ou du bord supérieur du passage (4) sur la partie du boisseau (3) située en-dessous ou audessus, et la partie restante du boisseau (3) est de forme cylindrique ou conique.

12. Robinet selon l'une des revendications 1 à 11, caractérisé en ce que le boisseau (3) est en métal ou en métal enrobé de matière synthétique notamment d'une matière synthétique fluorée ou encore le boisseau (3) est en matière synthétique et comprend un noyau métallique ou est complètement en matière synthétique.

13. Robinet selon l'une des revendications 1 à 11, caractérisé en ce que le boisseau (3) est en matière céramique.

14. Robinet selon l'une des revendications 1 à 13, caractérisé en ce que l'insert (5) est prévu dans un retrait (6a) de cavité (6) du corps (1).

15. Robinet selon l'une des revendications 1 à 14, caractérisé en ce qu'il comporte un insert d'étanchéité élastique (8a) dans le revêtement (2) au niveau de l'axe d'entraînement (3a) du côté tourné vers le boisseau (3).

16. Robinet selon la revendication 15, caractérisé par un joint formé par une boîte à étoupes (8) au-dessus de l'insert d'étanchéité (8a), ce joint assurant l'étanchéité au-dessus du revêtement (2), par rapport à l'axe d'entraînement (3a).

17. Robinet selon l'une des revendications 1 à 16, caractérisé en ce que le boisseau (3) est monté au niveau de l'axe d'entraînement (3a) ou du côté opposé à l'axe d'entraînement (3a) sur un tourillon de palier ou moyen analogue ou par le bord supérieur et le bord inférieur du boisseau.

Figur 1

Figur 2

Figur 3

Figur 4